# DEMANDE DE BREVET EUROPEEN

(11) **EP 2 568 097 A1**
(43) Date de publication de la demande: **13.03.2013**
(21) Numéro de dépôt: 12183463.4
(22) Date de dépôt: 07.09.2012
(51) Int. Cl.: E04H 4/12

(54) **Groupe de filtration et d'entretien pour piscine équipé d'un système de domotique intégré**

(30) Priorité: 07.09.2011 FR 1102714
(71) Demandeur: Arbatax, 10000 Troyes (FR)
(72) Inventeur: Legrand, Jean-Michel, 10190 Chennegy (FR); Ostrowsky, Laurent, 75017 Paris (FR)
(74) Mandataire: Deschamps, Samuel

(57) **Abrégé**

L'invention concerne essentiellement un groupe de filtration et d'entretien pour piscine équipé d'un système de domotique intégré, le groupe de filtration comportant :
- un ensemble de filtration, et
- un ensemble de pompage permettant la circulation de l'eau de la piscine à travers l'ensemble de filtration,

caractérisé en ce que le système de domotique comporte :
- un récipient (30) situé à l'extérieur de la piscine comportant un corps (31) ainsi qu'un coude (32) dans sa partie inférieure assurant la mise en relation entre le corps (31) et le volume de la piscine de sorte que le niveau d'eau dans le corps (31) est le même que celui dans la piscine par le principe des vases communicants, et
- au moins une sonde positionnée à l'intérieur du corps (31) du récipient et sélectionné parmi le groupe suivant : une sonde (25.1) de mesure de pH, une sonde (25.2) de mesure du niveau de Chlore, une sonde (25.3) de remplissage mesurant le niveau d'eau dans la piscine, et une sonde (25.4), dite sonde de sécurité, retournant un niveau d'eau correspondant à l'eau disponible pour le refroidissement d'une pompe (18) du système de pompage.

## Description

**DOMAINE TECHNIQUE DE L'INVENTION**

L'invention concerne un groupe de filtration et d'entretien pour piscine équipé d'un système de domotique intégré.

L'invention trouve une application particulièrement dans le domaine des piscines ayant un système de domotique installé lors de la réalisation de la piscine et non après la réalisation de la piscine.

**ETAT DE LA TECHNIQUE**

On connaît des groupes de filtration et d'entretien comprenant un ensemble de filtration et un ensemble de pompage. L'ensemble de filtration est relié à sa partie supérieure à un espace qui débouche dans la bassin de la piscine par une ouverture d'entrée.

L'ensemble de filtration comprend de préférence au moins deux étages, un premier étage de filtration grossière et un deuxième étage de filtration fine. De préférence, l'étage de filtration grossière laisse passer les particules de dimension inférieure au millimètre sur un principe de filtre écran. Le second étage comprend de préférence un filtre cylindrique constitué d'une nappe d'un matériau plissé en accordéon maintenue entre deux flasques circulaires et entouré d'un système de maintien. Un conduit assure la liaison entre le point le plus bas de l'ensemble de filtration et remonte vers un multiplicateur de débit situé sensiblement au niveau nominal de l'eau dans la piscine.

L'ensemble de pompage est formé par une pompe et le multiplicateur de débit muni d'un injecteur. La pompe aspire en sortie du deuxième étage de filtration l'eau filtrée et l'injecte sous pression au niveau de l'injecteur du multiplicateur de débit de manière à créer un courant de circulation de l'eau à l'intérieur de la piscine par effet Venturi.

**OBJET DE L'INVENTION**

L'invention a pour but d'intégrer un système de domotique à un tel groupe de filtration ou à tout autre groupe de filtration équivalent. Par « intégré », on entend le fait qu'il sera possible d'installer le groupe de filtration lors de la réalisation de la piscine.

A cet effet, l'invention concerne un groupe de filtration et d'entretien pour piscine équipé d'un système de domotique intégré, le groupe de filtration comportant :
- un ensemble de filtration, et
- un ensemble de pompage permettant la circulation de l'eau de la piscine à travers l'ensemble de filtration,
   **caractérisé en ce que** le système de domotique comporte :
- un récipient situé à l'extérieur de la piscine comportant un corps ainsi qu'un coude dans sa partie inférieure assurant la mise en relation entre le corps et le volume de la piscine de sorte que le niveau d'eau dans le corps est le même que celui dans la piscine par le principe des vases communicants, et
- au moins une sonde positionnée à l'intérieur du corps du récipient et sélectionné parmi le groupe suivant : une sonde de mesure de pH, une sonde de mesure du niveau de Chlore, une sonde de remplissage mesurant le niveau d'eau dans la piscine, et une sonde, dite sonde de sécurité, retournant un niveau d'eau correspondant à l'eau disponible pour le refroidissement d'une pompe du système de pompage.

Selon une réalisation, la ou les sondes du système de domotique sont reliées à un boîtier de domotique par l'intermédiaire d'un coffret d'acquisition.

Selon une réalisation, la liaison entre le coffret d'acquisition et le boîtier domotique est réalisée au moyen d'un bus de communication à 4 fils.

Selon une réalisation, le système de domotique comporte en outre deux sondes respectivement de mesure de la température de l'air et de la température de l'eau installées à l'intérieur du groupe de filtration.

Selon une réalisation, le système de domotique comporte également un bouton de commande de la pompe situé autour de la piscine.

Selon une réalisation, le récipient est situé sous une trappe positionnée au dessus d'un multiplicateur de débit appartenant à l'ensemble de pompage.

L'invention concerne en outre un système de domotique pour piscine **caractérisé en ce qu'il** comporte :
- un récipient situé à l'extérieur de la piscine comportant un corps ainsi qu'un coude dans sa partie inférieure assurant la mise en relation entre le corps et le volume de la piscine de sorte que le niveau d'eau dans le corps est le même que celui dans la piscine par le principe des vases communicants, et
- au moins une sonde positionnée à l'intérieur du corps du récipient et sélectionné parmi le groupe suivant : une sonde de mesure de pH, un sonde de mesure du niveau de Chlore, une sonde de remplissage mesurant le niveau d'eau dans la piscine, et une sonde, dite sonde de sécurité, retournant un niveau d'eau correspondant à l'eau disponible pour le refroidissement d'une pompe du système de pompage.

**BREVE DESCRIPTION DES FIGURES**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique d'un système de filtrage utilisé avec le système de domotique intégré selon l'invention ;

Figure 2 : une vue de dessus d'une piscine comportant un groupe de filtration équipé d'un système de domotique selon l'invention ;

Figure 3 : une représentation en perspective d'un groupe de filtration équipé d'un système de domotique selon l'invention faisant apparaître les zones de localisation des différentes sondes utilisées ;

Figure 4 : une représentation schématique des échanges de données entre un boîtier domotique, un serveur centralisé, et un terminal d'un utilisateur.

Les éléments identiques conservent la même référence d'une figure à l'autre.

**DESCRIPTION D'EXEMPLES DE REALISATION DE L'INVENTION**

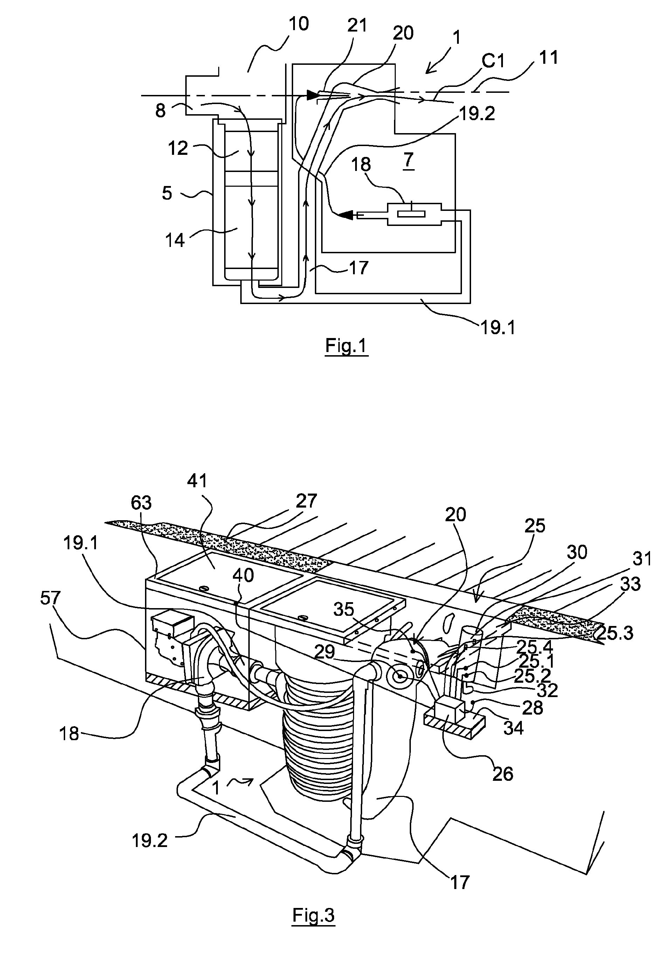

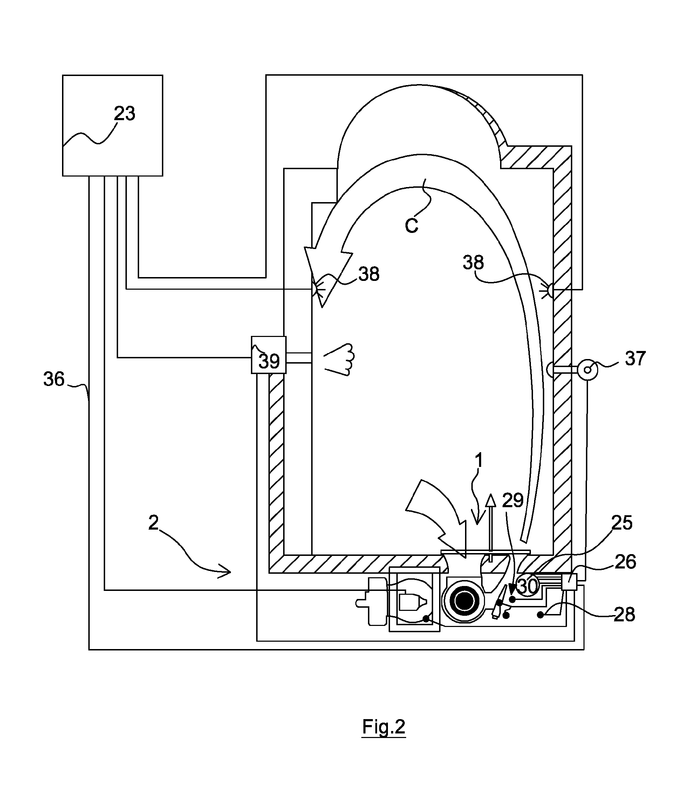

La Figure 1 montre une représentation schématique d'un groupe 1 de filtration et d'entretien pour piscine mettant en oeuvre un système 2 de domotique montré sur les Figures 2 et 3.

Ce groupe de filtration 1 comporte un ensemble de filtration 5 et un ensemble de pompage 7. Plus précisément, l'ensemble de filtration 5 est relié à sa partie supérieure à un espace qui débouche dans la bassin de la piscine par une ouverture d'entrée 8, formée par un élément connu dans la technique sous le nom de « skimmer » et qui peut être fermée par un bouchon ou un obturateur, non représenté. L'espace supérieur a aussi une ouverture supérieure 10 qui se trouve normalement au niveau du sol et qui est fermé par une trappe. Le niveau d'eau est représenté sur la figure par un trait discontinu 11.

L'ensemble de filtration 5 comprend de préférence au moins deux étages, un premier étage 12 de filtration grossière et un deuxième étage 14 de filtration fine. De préférence, l'étage de filtration grossière 12 laisse passer les particules de dimension inférieure au millimètre sur un principe de filtre écran. Le second étage 14 comprend de préférence un filtre cylindrique constitué d'une nappe d'un matériau plissé en accordéon maintenue entre deux flasques circulaires et entouré d'un système de maintien. Un conduit 17 assure la liaison entre le point le plus bas de l'ensemble de filtration et remonte vers un multiplicateur de débit 20 situé sensiblement au niveau nominal de l'eau dans la piscine.

L'ensemble de pompage 7 est formé par une pompe 18 et le multiplicateur de débit 20 muni d'un injecteur 21. La pompe 18 aspire en sortie du deuxième étage de filtration l'eau filtrée, via un conduit 19.1, et l'injecte sous pression au niveau de l'injecteur 21 du multiplicateur de débit 20, via un conduit 19.2, de manière à créer un courant de circulation C de l'eau à l'intérieur de la piscine par effet Venturi. En effet, l'injection de l'eau dans le multiplicateur de débit 20 présentant un rétrécissement de section entre l'injecteur 21 et sa sortie, a pour effet de générer un courant d'eau C1 allant de l'entrée du skimmer, puis du premier 12 vers le deuxième étage 14 de l'ensemble 5 de filtration, puis par le conduit 17 pour enfin sortir par l'ouverture du multiplicateur de débit 20 dirigée vers la piscine. Pour plus de précisions sur la réalisation du multiplicateur de débit, on se rapportera au document FR2855432 ainsi qu'au brevet français numéro 01 05556.

Par ailleurs, comme montré sur la Figure 2, le système 2 de domotique assurant la gestion du fonctionnement des différents organes de la piscine comporte trois éléments principaux : un boîtier 23 domotique gérant l'ensemble des sondes de mesure et assurant la commande des différents organes situés autour de la piscine ; un ensemble 25 de capteurs intégré au groupe 1 de filtration ; et un coffret 26 d'acquisition permettant de collecter les différentes mesures des sondes pour les transmettre vers le boîtier 23 domotique. L'utilisation du coffret 26 d'acquisition permet de limiter le nombre de liaisons filaires à installer entre le groupe de filtration 1 et le boîtier 23 domotique.

Plus précisément, l'ensemble 25 de capteurs comporte au moins une sonde 25.1 de mesure de pH, un sonde 25.2 de mesure du niveau de Chlore, une sonde 25.3 de remplissage mesurant le niveau d'eau dans la piscine, ainsi qu'une sonde 25.4, dite sonde de sécurité, retournant un niveau d'eau correspondant à l'eau disponible pour le refroidissement de la pompe 18 (cf. Figure 3). A cet effet, l'ensemble 25 comporte un récipient 30 ayant un corps 31 à l'intérieur duquel les sondes 25.1-25.4 sont positionnées ; ainsi qu'un coude 32 dans sa partie inférieure assurant la mise en relation entre le corps 31 et le volume de la piscine de sorte que le niveau d'eau dans le corps 31 est le même que celui dans la piscine par le principe des vases communicants. L'ensemble 25 est situé sous une trappe 33 positionnée au dessus de l'ensemble multiplicateur de débit 20-injecteur 21, c'est-à-dire dans la zone située à droite de l'ensemble de filtration sur la Figure 3. Suivant cette configuration, l'invention permet de produire de manière aisée un groupe 1 de filtration comportant un ensemble de capteurs installé au moment de la réalisation de la piscine.

L'ensemble 25 de capteurs est relié au boîtier 23 domotique par l'intermédiaire du coffret 26 d'acquisition. Le coffret 26 d'acquisition, tout comme l'ensemble 25 et le groupe 1 de filtration, est positionné à l'extérieur de la piscine, derrière un mur de la piscine référencé 27. Le coffret 26 est de préférence positionné sur un support 34. La liaison entre le coffret 26 d'acquisition et le boîtier domotique 23 est réalisée de préférence au moyen d'un bus de communication à 4 fils référencé 36.

Il est également possible d'utiliser deux sondes 28, 29 respectivement de mesure de la température de l'air et de la température de l'eau installées à l'intérieur du groupe de filtration 1. Ces sondes 28, 29 sont reliées au coffret 26 d'acquisition. De préférence, un capteur 35 de dépression, dit pressostat, est positionné dans le groupe de filtration 1 à l'intérieur du multiplicateur de débit 20 ou à proximité du fond de l'ensemble 5 de filtration. Le système de domotique 2 comporte également un bouton 37 de commande de la pompe 18 activant la fonction « baignade » (voir ci-dessous). Ce bouton 37 prend par exemple la forme d'un bouton poussoir manuel situé au dessus de l'eau. En variante, le bouton 37 peut être remplacé par un capteur de dépression situé à l'intérieur de la piscine.

Par ailleurs, un capteur 40 assure la détection de l'ouverture d'une trappe 41 du local pompe à l'intérieur duquel la pompe 18 est positionnée.

Le boîtier 23 domotique est également relié à des organes de la piscine tels que la pompe 18, des lampes 38 d'un dispositif d'éclairage, ainsi qu'au moteur d'un dispositif 39 de nage à contre-courant pour en commander le fonctionnement, c'est-à-dire notamment la mise en marche et l'arrêt. A cet effet, le boîtier 23 est relié aux modules de puissance de ces différents organes 18, 38 et 39.

Le boîtier 23 domotique est susceptible de mettre en oeuvre plusieurs fonctionnalités :
- Fonctions d'information de base de l'utilisateur : Les valeurs retournées par les différents capteurs sont affichées sur un terminal de l'utilisateur ou sur un écran du boîtier domotique 23. Lorsque la sonde 25.1 de mesure de pH et/ou de chlore 25.2 retournent des valeurs qui ne sont pas comprises dans des plages de référence correspondant à une bonne qualité de l'eau, le boîtier domotique 23 émet un message à destination de l'utilisateur indiquant qu'il est nécessaire de prendre des mesures pour modifier le niveau de pH et/ou de chlore.
- Fonction de protection du système de filtration : dans le cas où la sonde 25.4 renvoie un niveau inférieur à un niveau seuil correspondant à un niveau suffisant pour permettre le refroidissement de la pompe, le boîtier 23 interdit la mise en route de la pompe 18 et émet un message à destination de l'utilisateur indiquant qu'il faut ajouter de l'eau dans la piscine.
- Fonction baignade : l'utilisateur souhaitant se baigner dans la piscine appuie manuellement sur le bouton 37, ce qui va générer un signal à destination du boîtier domotique 23 via le coffret 26 d'acquisition. En réponse à ce signal, le boîtier 23 va alors commander le fonctionnement de la pompe 18 pour assurer la filtration de l'eau lors de la baignade de l'utilisateur. En variante, le bouton 37 étant remplacé par un capteur de dépression, dès que le boîtier domotique 23 détecte que le capteur renvoie une valeur correspondant à la présence d'une personne dans la piscine, alors le boîtier domotique 23 commande automatiquement le fonctionnement de la pompe 18 au moins jusqu'au moment où la personne sort de la piscine.
- Fonction détection encrassement du filtre : le groupe de filtration 1 fonctionnant par effet Venturi, il crée une dépression très faible dans un fonctionnement normal, c'est-à-dire lorsque le filtre du deuxième étage 14 de filtration n'est pas encrassé. En conséquence, dès que l'on observe une dépression importante, on peut en déduire que le filtre du deuxième étage 14 est encrassé et qu'il est nécessaire de le nettoyer et, s'il y lieu, de le changer. Selon une mise en oeuvre de ce principe, tant que le pressostat 35 mesure une valeur inférieure à un seuil de dépression, alors le boîtier 23 de domotique n'émet aucun message particulier à destination de l'utilisateur. En revanche, dès que le pressostat 35 retourne une valeur supérieure au seuil de dépression, alors un message d'information indiquant qu'il faut prendre des mesures pour nettoyer ou changer le filtre est affiché. Le seuil de dépression est par exemple compris entre 20millibars et 75 millibars suivant la position du capteur à l'intérieur du groupe de filtration 1.
- Fonction hivernage actif : cette fonction a pour but d'éviter que l'eau gèle dans les conduits du groupe de filtration et les fasse exploser en cas de basse température. A cette fin, lorsque le boîtier domotique 23 détecte, au moyen de la sonde de température 28 ou 29, une température inférieure à une valeur seuil ; alors le boîtier domotique 23 commande le fonctionnement de la pompe 18 pendant une période donnée. Dans un exemple, la valeur seuil est de l'ordre de 2 degrés Celcius.
L'homme du métier aura compris qu'à chaque fonction est associé un programme d'ordinateur mis en oeuvre pour la commande des différents organes en fonction des mesures retournées par les capteurs.

Dans les différents modes, les messages émis à destination de l'utilisateur seront par exemple affichés sur une interface homme/machine d'un terminal 47 de l'utilisateur en relation avec un serveur 45 contenant les informations relatives à sa piscine.

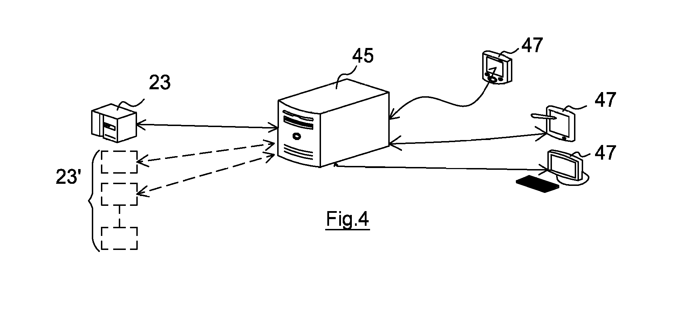

Comme montré sur la Figure 4, pour assurer une gestion centralisée d'un ensemble de piscines par un opérateur (par exemple le distributeur de piscines), le boîtier 23 de domotique, tout comme d'autres boîtiers 23' domotiques associés à d'autres piscines, est relié à un serveur 45 centralisé par l'intermédiaire du réseau Internet. L'utilisateur peut se connecter au serveur 45 par l'intermédiaire d'un terminal 47 pouvant notamment prendre la forme d'un téléphone du type SMARTPHONE, d'un ordinateur fixe ou portable.

On détaille ci-après le principe d'échange d'informations entre le boîtier domotique 23, le serveur centralisé 45, et le terminal utilisateur 47. Lors de l'installation du boîtier domotique 23, ce dernier, relié par câble ou Wifi au modem/routeur de l'utilisateur, initialise seul la connexion avec le serveur 45 sans intervention sur le réseau interne de l'utilisateur. Le boîtier domotique 23 est alors identifié comme une nouvelle installation sur le serveur centralisé 45.

En cours d'utilisation le boîtier domotique 23 envoie à intervalles réguliers, par exemple toutes les minutes, un fichier récapitulant l'état de la piscine sur le serveur centralisé 45 et vient lire un fichier contenant les ordres passés par l'utilisateur afin de les mettre en oeuvre. Ces ordres pourront par exemple consister en une commande des différents organes de la piscine mais aussi en une commande de matériel de rechange comme des filtres pour l'ensemble de filtration.

L'utilisateur peut connaître l'état de sa piscine et envoyer des ordres en se connectant, via son terminal 47, sur un site hébergé sur le serveur centralisé 45 ou sur les applications mobiles qui communiquent avec le serveur centralisé 45.

A la lecture de la description, l'homme du métier aura compris que les fonctionnalités principales de mesure notamment de pH et de Chlore du système de domotique 2 selon l'invention pourront également être mises en oeuvre avec des groupes de filtration autres que celui décrit aux Figures 1 et 3. En effet, dès qu'il sera possible d'installer le récipient 30 derrière un mur de piscine, la mise en oeuvre de l'invention sera possible.

## Revendications

1. Groupe de filtration et d'entretien pour piscine équipé d'un système de domotique, le groupe de filtration comportant :
- un ensemble (5) de filtration, et
- un ensemble (7) de pompage permettant la circulation de l'eau de la piscine à travers l'ensemble (5) de filtration,
**caractérisé en ce que** le système de domotique comporte :
- un récipient (30) situé à l'extérieur de la piscine comportant un corps (31) ainsi qu'un coude (32) dans sa partie inférieure assurant la mise en relation entre le corps (31) et le volume de la piscine de sorte que le niveau d'eau dans le corps (31) est le même que celui dans la piscine par le principe des vases communicants, et
- un ensemble (25) de capteurs positionnée à l'intérieur du corps (31) du récipient et comportant au moins une sonde (25.1) de mesure de pH, une sonde (25.2) de mesure du niveau de Chlore, une sonde (25.3) de remplissage mesurant le niveau d'eau dans la piscine, et une sonde (25.4), dite sonde de sécurité, retournant un niveau d'eau correspondant à l'eau disponible pour le refroidissement d'une pompe (18) du système de pompage.

2. Groupe de filtration et système de domotique selon la revendication 1, **caractérisé en ce que** la ou les sondes du système de domotique sont reliées à un boîtier (23) de domotique par l'intermédiaire d'un coffret (26) d'acquisition.

3. Groupe de filtration et système de domotique selon la revendication 2, **caractérisé en ce que** la liaison entre le coffret (26) d'acquisition et le boîtier domotique est réalisée au moyen d'un bus de communication à 4 fils.

4. Groupe de filtration et système de domotique selon l'une des revendications 1 à 3, **caractérisé en ce que** le système de domotique comporte en outre deux sondes (28, 29) respectivement de mesure de la température de l'air et de la température de l'eau installées à l'intérieur du groupe de filtration (1).

5. Groupe de filtration et système de domotique selon la revendication 2, **caractérisé en ce que** le système de domotique (2) comporte également un bouton (37) de commande de la pompe (18) situé autour de la piscine.

6. Groupe de filtration selon l'une des revendications 1 à 5, **caractérisé en ce que** le récipient (30) est situé sous une trappe (33) positionnée au dessus d'un multiplicateur de débit (20) appartenant à l'ensemble de pompage.
